(19) Europäisches Patentamt
European Patent Office
Office européen des brevets

(11) **EP 3 086 523 A1**

(12) **EUROPEAN PATENT APPLICATION**

(43) Date of publication:
**26.10.2016 Bulletin 2016/43**

(51) Int Cl.:
***H04L 27/26*** *(2006.01)*

(21) Application number: **15305618.9**

(22) Date of filing: **23.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventor: **Gerlach, Christian**
**70435 Stuttgart (DE)**

(74) Representative: **2SPL Patentanwälte PartG mbB**
**Postfach 15 17 23**
**80050 München (DE)**

Remarks:
Amended claims in accordance with Rule 137(2) EPC.

(54) **APPARATUS, SUB-CARRIER MODULE, TRANSMITTER MODULE, METHOD AND COMPUTER PROGRAM FOR PROVIDING AN OUTPUT SIGNAL FOR A FILTER MODULE**

(57)    A constant envelope filtered multicarrier system is proposed. When the OFDM or each Universal Filtered MultiCarrier (UFMC) band signal is filtered subsequently to the IFFT, the filter introduces a ramp-up and down parts which create power variations. To restore a constant power, consecutive symbols are overlapped such that a ramp-up of the cyclic prefix of the second filtered symbol overlaps with the ramp-down of the fist filtered symbol. The width of the overlapping region equals the filter's length.

Fig. 9

## Description

Technical Field

Embodiments relate to an apparatus, a sub-carrier module, a transmitter module, a method and a computer program for providing an output signal for a filter module, more particularly, but not exclusively, to a concept for reducing or avoiding periodic power operations and improving a Peak-to-Average-Power-Ratio (PAPR) based on an overlapping of symbols.

Background

This section introduces aspects that may be helpful in facilitating a better understanding of the invention(s). Accordingly, the statements of this section are to be read in this light and are not to be understood as admissions about what is in the prior art or what is not in the prior art.

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. The demands are growing for both directions of transmission, in the DownLink (DL) for transmission from the network infrastructure to a mobile transceiver, as well as in the UpLink (UL) for transmission from a mobile transceiver to the network infrastructure. For even higher spectral efficiencies, e.g. as may be used in a 5th Generation (5G) mobile communication system, various technologies are being developed or refined, e.g. Orthogonal Frequency Division Multiplexing (OFDM), Universal Filtered MultiCarrier (UFMC) or Filter Bank Multicarrier (FBMC).

More Information can be found in:

Schaich, F., Wild, T., & Chen, Y. (2014). Waveform contenders for 5G-suitability for short packet and low latency transmissions. IEEE VTCs, 14.

Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide an apparatus, a sub-carrier module, a transmitter module, a method and a computer program for providing an output signal for a filter module. To further increase a spectral efficiency of a signal compared to Orthogonal Frequency-Division Multiplexing (OFDM), a reduction of the side-lobes of carrier frequencies of a signal may be achieved by performing an inverse Fourier-Transformation for each carrier frequency and band-pass filtering the carrier frequencies individually instead of performing a combined inverse Fourier-Transformation for the entire frequency spectrum. When a time-domain input signal, e.g. the result of such an inverse Fourier-Transformation for a carrier frequency, is processed by a filter and transmitted over a channel, the resulting output signal may be based on the input signal, an impulse response of the filter and a delay spread of the channel. When transmitting time-domain symbols in the time-domain input signal, which are processed individually, e.g. because they are based on the inverse Fourier-Transformation and are to be re-transformed into the frequency domain, sufficient additional time may be kept between symbols to decrease inter-symbol interference. The additional time may lead to a ramp-up/ramp-down phase with reducing power before/after the symbol is transmitted and thus cause periodic power variations, which may cause interference in other electronic devices, and increase the PAPR.

In embodiments, a processing module may add a cyclic prefix to a symbol to overlap ramp-down and ramp-up phases of subsequent symbols to reduce the PAPR. As the cyclic prefix is also processed by the filter and transmitted over the channel, the impulse response of the filter and the channel may lead to a ramp-up of the resulting output symbol on the output signal, which may complement with the ramp-down of the previous symbol, if they are properly aligned by the processing module. In a subsequent step, at the receiving side of the channel, the cyclic prefix may be removed using a corresponding windowing operation.

Embodiments provide an apparatus for providing an output signal $\bar{s}_i$ for a filter module. The apparatus comprises an input to obtain an input signal $s_i$. The input signal $s_i$ comprises at least a first input symbol $s_i(n)$ and a subsequent second input symbol $s_i(n+1)$. An input symbol comprises two or more samples. The apparatus further comprises an output to provide the output signal $\bar{s}_i$ and the apparatus comprises a processing module, which is coupled to the input and the output. The processing module is configured to determine the output signal $\bar{s}_i$ based on the input signal $s_i$. The output signal $\bar{s}_i$ comprises at least a first output symbol $\bar{s}_i(n)$ based on the first input symbol $s_i(n)$ and a subsequent second output symbol $\bar{s}_i(n+1)$ based on the second input symbol $s_i(n+1)$. An output symbol comprises a prefix and an input symbol. The processing module is further configured to obtain information related to an overlapping region of subsequent filtered output symbols in a filtered output signal $\tilde{s}_i$. The filtered output signal is provided by the filter module based on the output signal $\bar{s}_i$. The overlapping region of the subsequent filtered output symbols is based on a later filter operation of the filter module. The processing module is further configured to determine a time alignment of the first output symbol and the second output symbol based on the information related to the overlapping region such that the first output symbol and the second output symbol are timely aligned. The addition of the prefix and the overlaying of a ramp-up of the prefix and a ramp-down of a filter impulse response may reduce or avoid periodic power variations and decrease the PAPR by reducing power variations between symbol trains. The index i is used to indicate that the respective signals or signal components are processed in the same processing branch. In the sequel further embodiments will be described which may utilize multiple processing branches, which will then be distinguished using different indices i.

In at least some embodiments, the apparatus may further comprise the filter module to carry out the later filter operation. The filter module may provide a filtered output signal $\tilde{s}_i$ based on the output signal $\bar{s}_i$. The filtered output signal $\tilde{s}_i$ may comprise at least a first filtered symbol $\tilde{s}_i(n)$ based on the first output symbol $\bar{s}_i(n)$ and a subsequent second filtered symbol $\tilde{s}_i(n+1)$ based on the second output symbol $\bar{s}_i(n+1)$. The processing module may be configured to timely align the first $\bar{s}_i(n)$ and second $\bar{s}_i(n+1)$ output symbols such that the prefix of the second filtered symbol $\tilde{s}_i(n+1)$ may partly overlap with the first filtered symbol $\tilde{s}_i(n)$ generated by the first output symbol $\bar{s}_i(n)$ based on the information related to the overlapping region of symbols. The addition of the prefix and the overlaying of a ramp-up of the prefix and a ramp-down of a filter impulse response may reduce or avoid periodic power variations and decrease the PAPR and allow adaptation of the prefix length to the filter length.

In various embodiments, a duration of the prefix may be at least based on the information related to the overlapping region. In at least some embodiments, the processing module may be configured to obtain information related to a delay spread of a radio channel. The duration of the prefix may be further based on the information related to the delay spread of the radio channel. The addition of the prefix and the overlaying of a ramp-up of the prefix and a ramp-down of a filter impulse response may reduce or avoid periodic power variations and decrease the PAPR by maintaining a steadier power output between symbol trains. A prefix length based on the delay spread of the channel may enable a reduction of Inter Symbol Interference (ISI).

In at least some embodiments, the filter module may be configured to band pass filter the first $\bar{s}_i(n)$ and second $\bar{s}_i(n+1)$ output symbols. The band-pass filter may reduce the side-lobes of a sub-carrier signal to allow for an increased spectral density and increase spectral efficiency.

In at least some embodiments, the filter module may comprise a filter impulse response with a ramp-up period and a ramp-down period. The processing module may be configured to adjust a duration of the prefix based on the ramp-up and ramp-down periods of the filter module. An overlaying of the ramp-down of a symbol and the ramp-up of the prefix of a subsequent symbol may reduce or avoid periodic power variations in the output signal and/or decrease the PAPR by reducing power variations.

In various embodiments, the processing module may be configured to combine discrete values of the first $\bar{s}_i(n)$ and second $\bar{s}_i(n+1)$ output symbols in the overlapping region. An overlaying of the ramp-down of the first $\bar{s}_i(n)$ output symbol and the ramp-up of the second $\bar{s}_i(n+1)$ output symbol may balance a signal level of the combined signal, reduce or avoid periodic power variations in the output signal and/or decrease the PAPR of the combined signal.

In at least some embodiments, the input may be configured to obtain the input signal $s_i$ from a transformation module, to which the input may be coupled to. The transformation module may supply the time-domain input signal, e.g. based on a frequency domain input signal. Subsequent processing, e.g. at a receiver, may then be carried out in the frequency domain, which may be advantageous in term of equalization.

In various embodiments, the transformation module may correspond to an Inverse-Fourier-Transformation module, for example, the transformation module may correspond to an Inverse-Discrete-Fourier-Transformation module. The Inverse-Fourier-Transformation module and/or the Inverse-Discrete-Fourier-Transformation module may supply the time-domain input signal, e.g. based on a frequency domain input signal input thereto.

In at least some embodiments, the prefix of the first or the second output symbol may be based on the last of the two or more sequential discrete values of the first or the second input symbol. Using discrete values from the same symbol for the prefix may enable an easier processing of the symbol at the receiving side, as the symbol may be distorted by components of the same symbol, which may be adjusted in the frequency domain and may be beneficial in equalization or distortion of a receive signal.

Embodiments further provide a sub-carrier module suitable for providing a filtered output signal $\tilde{s}_i$. The sub-carrier module comprises an Inverse-Fourier-Transformation module and an embodiment of the above-described apparatus. The Inverse-Fourier-Transformation module is configured to obtain a frequency domain input signal and the Inverse-Fourier-Transformation module is configured to provide a time domain input signal as the input signal $s_i$. The apparatus further comprises a filter module configured to filter the output signal $\bar{s}_i$ to obtain a filtered output signal $\tilde{s}_i$. A sub-carrier module may provide a sub-carrier component for a Universal Filtered Multi-Carrier (UFMC) signal, based on an inverse Fourier Transformation, a cyclic prefix and an alignment of the output symbols to reduce or avoid periodic power variations in the output signal and/or reduce PAPR and a band-pass filter to reduce the side-lobes of the sub-carrier component, to allow for an increased spectral density or spectral efficiency.

Embodiments further provide a transmitter module comprising two or more sub-carrier modules as described above and an aggregation module. The aggregation module is configured to provide an aggregated output signal $\tilde{s}$ in the time domain based on the two or more filtered output signals from the two or more sub-carrier modules. By providing the aggregated output signal $\tilde{s}$ based on two or more filtered output signals, the transmitter module may improve a spectral efficiency by increasing the number of signals transmitted simultaneously.

In at least some embodiments, the transmitter module may further comprise a radio frequency converter configured to provide a converted output signal based on the aggregated output signal. In various embodiments, the radio frequency converter may allow the transmission of the aggregated output signal as converted output signal in the radio frequency spectrum.

In various embodiments, the transmitter module may further comprise a power amplifier, which is configured to amplify the converted output signal.

Embodiments further provide a method for providing an output signal $\overline{s}_i$ for a filter module. The method comprises obtaining an input signal $s_i$. The input signal $s_i$ comprises at least a first input symbol $s_i(n)$ and a subsequent second input symbol $s_i(n + 1)$. An input symbol comprises two or more samples. The method further comprises providing the output signal $\overline{s}_i$ and determining the output signal $\overline{s}_i$ based on the input signal $s_i$. The output signal $\overline{s}_i$ comprises at least a first output symbol $\overline{s}_i(n)$ based on the first input symbol $s_i(n)$ and a subsequent second output symbol $\overline{s}_i(n + 1)$ based on the second input symbol $s_i(n + 1)$. An output symbol comprises a prefix and an input symbol. The method further comprises obtaining information related to an overlapping region of subsequent filtered output symbols in a filtered output signal $\tilde{s}_i$. The filtered output signal is provided by the filter module based on the output signal $\overline{s}_i$. The overlapping region of the subsequent filtered output symbols is based on a later filter operation of the filter module. The method further comprises determining a time alignment of the first output symbol and the second output symbol based on the information related to the overlapping region such that the first output symbol and the second output symbol are timely aligned.

Embodiments further provide a computer program having a program code for performing the above method, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A further embodiment is a computer program product comprising a computer readable medium having computer readable program code embodied therein, the computer readable program code being configured to implement one of the above methods when being loaded on a computer, a processor, or a programmable hardware component.

Brief description of the figures

Some other features or aspects will be described using the following non-limiting embodiments of apparatuses or methods or computer programs or computer program products by way of example only, and with reference to the accompanying figures, in which:

Fig. 1     illustrates a block diagram of an embodiment of an apparatus for providing an output signal $\overline{s}_i$ for a filter module;

Fig. 2a    illustrates a block diagram of processing steps and modules in UFMC;

Fig. 2b    shows a graph of power envelopes of OFDM and UFMC;

Fig. 3     illustrates a block diagram of an embodiment of an apparatus for providing an output signal $\overline{s}_i$ for a filter module further comprising the filter module;

Fig. 4     illustrates a block diagram of an embodiment of a sub-carrier module;

Fig. 5     illustrates a block diagram of an embodiment of a transmitter;

Fig. 6a    illustrates an Inverse Fast Fourier Transformation module;

Fig. 6b    illustrates a diagram of a time-domain signal with and without a cyclic prefix;

Fig. 6c    illustrates a band-pass filter module;

Fig. 6d    illustrates a diagram of a time-domain signal after a filter operation;

Fig. 7     illustrates a diagram of a time-domain signal having overlapping symbols;

Fig. 8     illustrates a block diagram of an embodiment of an embodiment of a transmitter and additional receiver components;

Fig. 9     illustrates a diagram of a time-domain signal having overlapping symbols; and

Fig. 10    illustrates a flow chart of an embodiment of a method for providing an output signal $\overline{s}_i$ for a filter module.

Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Universal Filtered Multi-Carrier (UFMC) is a proposal of multicarrier waveform for the 5th generation mobile radio system air interface. It is described e.g. in the paper "Waveform contenders for 5G - suitability for short packet and low latency transmissions" by Frank Schaich, Thorsten Wild, Yejian Chen, Alcatel-Lucent AG, Bell Labs on IEEE VTC spring 2014.

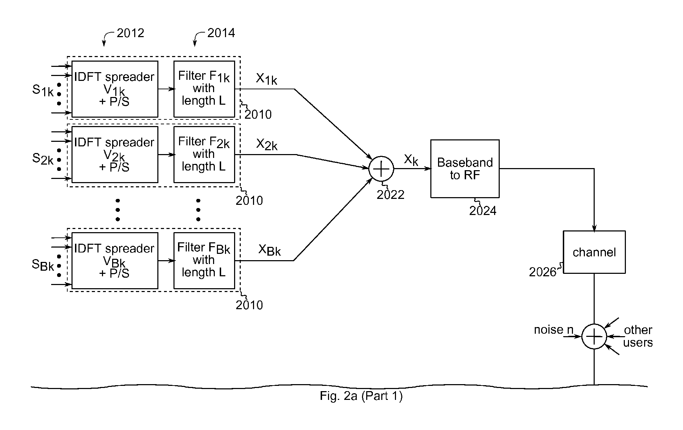

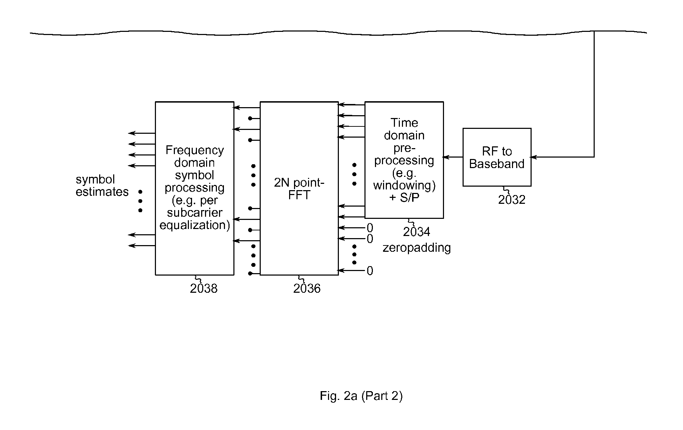

The advantages of UFMC compared to Orthogonal Frequency-Division Multiplexing (OFDM) may include lower spectral side lobes which may allow also less tight or strict synchronization requirements for e.g. sensor messages where the sensors may also communicate asynchronously and a higher spectral efficiency because of reduced need for guard bands. Fig. 2a illustrates a block diagram of UFMC, comprising two or more sub-carrier components 2010, which each comprise an inverse discrete Fourier-Transformation spreader 2012 and a filter component 2014 to process a frequency-domain input signal $s_{ik}$. The two or more sub-carrier components 2010 are coupled to an aggregation module 2022, which aggregates the outputs $x_{ik}$ of the two or more sub-carrier components. The output $x_k$ of the aggregation module is converted to the Radio Frequency (RF) range using a Baseband to RF converter 2024. Then, the resulting output signal is transmitted over a channel 2026, which may add noise and signals of other users. The signal is received on a receiver side, and converted to the Baseband using a RF to Baseband converter 2032. A time-domain processing module 2034 is configured to process the Baseband signal and perform basic processing steps in the time-domain, e.g. windowing of the signal. The resulting signal is then processed using a Fast-Fourier-Transformation module 2036 and then processed in the frequency domain, e.g. using per sub-carrier equalization, using a frequency domain processing module 2038.

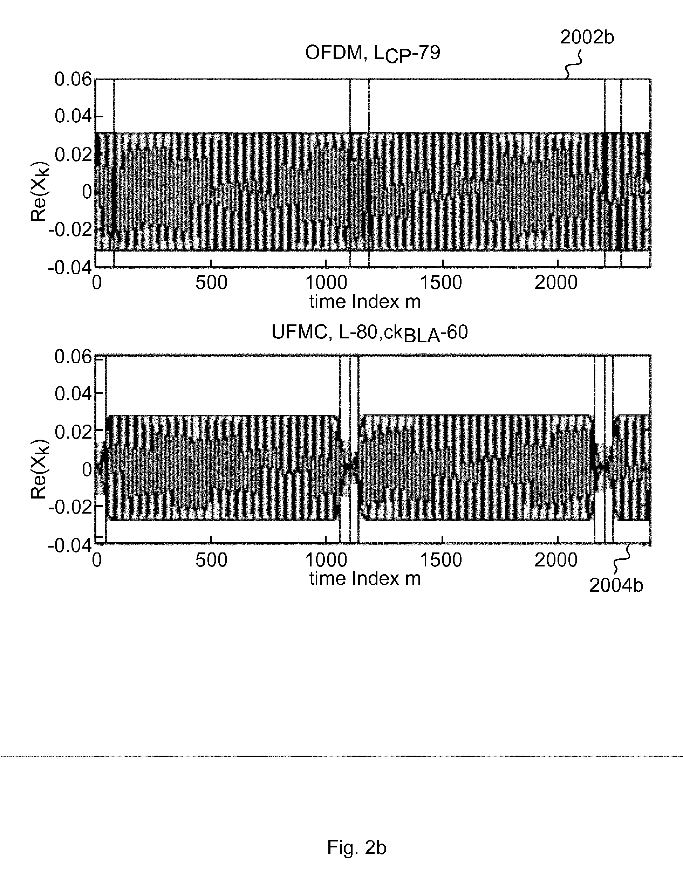

Fig. 2b shows a graph of power envelopes of OFDM 2002b at the top and UFMC 2004b at the bottom. As shown in Fig. 2b 2004b the filter ramp-up and ramp-down at the borders of the UFMC symbols (indicated by 2006b in Fig. 2b) may lead to a power variation over time, which might not be present in OFDM 2002b. This power variation might not be desirable thinking of implementation aspects e.g. with real power amplifiers, disturbances caused by periodic power variations in other electronic devices, and PAPR. It might be avoided e.g. for the reasons of having a continuous use of the air interface and to not result in undesired modulations. Depending on the parameter settings these could (as in the GSM air interface) result in audible noise in hearing aids, phones, microphones or other electro acoustic equipment. The power modulation is due to the band pass filters $F_{ik}$ 2014 shown in Fig. 2a above.

It may be desirable to have a multi-carrier modulation with the same desired properties of low spectral side lobes, inter-symbol interference protection and ease of demodulation as UFMC but with a more constant envelope, with less variations or a better PAPR, respectively, in the High Frequency (HF) domain, yet without the power variation.

At least some embodiments may introduce a cyclic prefix of length $L_{CP}$ for a symbol of length N before the filtering of length $L_{BP}$ with $L_{CP} \geq L_{BP}$ - 1 and afterwards overlap and add the resulting signal parts of length $N + L_{CP} + L_{BP}$ - 1 with the subsequent symbols, with an overlapping of $L_{BP}$ - 1 samples, so that for each OFDM symbol $N + L_{CP}$ base band values may be transmitted.

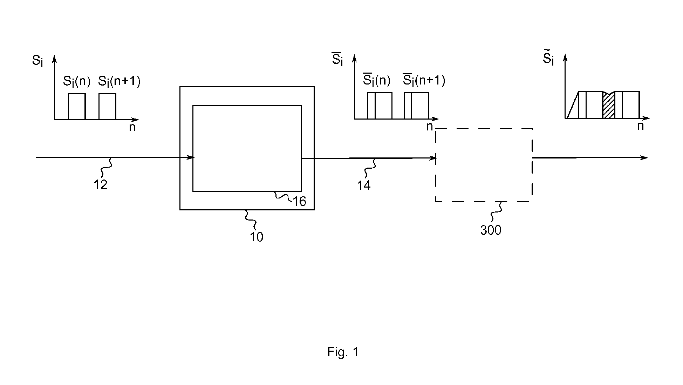

Fig. 1 illustrates a block diagram of an embodiment of an apparatus 10 for providing an output signal $\bar{s}_i$ for an optional filter module 300, which is indicated in Fig. 1 using broken lines. The apparatus 10 comprises an input 12 to obtain an input signal $s_i$. The input signal $s_i$ comprises at least a first input symbol $s_i(n)$ and a subsequent second input symbol $s_i(n + 1)$. An input symbol comprises two or more samples. In at least some embodiments, the input signal $s_i$ may correspond to a time domain input signal, e.g. a time-domain input signal based on an inverse Fourier-Transformed frequency domain input signal. In at least some embodiments, the frequency domain input signal may comprise a single sub-carrier of a composite multi-carrier signal. In at least some embodiments, an input symbol may correspond to a result of an inverse Fourier-Transformation. In at least some embodiments, the input 12 may be configured to obtain the input signal $s_i$ from a transformation module 200. The transformation module 200 may correspond to an Inverse-Fourier-Transformation module and/or to an Inverse-Discrete-Fourier-Transformation module.

An input, e.g. the input 12, may correspond to an interface for receiving information, which may be comprised in an electrical signal and/or in digital (bit) values according to a specified code, within a module, between modules or between modules of different entities. An input may further correspond to a contact or a register, which is configured to receive an input signal or information related to an input signal.

The apparatus 10 further comprises an output 14 to provide the output signal $\bar{s}_i$. An output, e.g. the output 14, may correspond to an interface for transmitting information, which may be comprised in an electrical signal and/or may be represented by digital (bit) values according to a specified code or protocol, within a module, between modules, or between modules of different entities. An output may further correspond to a contact or a register, which is configured to receive an input signal or information related to an input signal.

The apparatus 10 further comprises a processing module 16, coupled to the input 12 and the output 14. The processing module 16 is configured to determine the output signal $\bar{s}_i$ based on the input signal $s_i$. The output signal $\bar{s}_i$ comprises at least a first output symbol $\bar{s}_i(n)$ based on the first input symbol $s_i(n)$ and a subsequent second output symbol $\bar{s}_i(n + 1)$ based on the second input symbol $s_i(n + 1)$. An output symbol comprises a prefix and an input symbol, which are illustrated in Fig. 1 by the view graphs to the left and the right of the apparatus 10. The view graphs display the respective symbols on a discrete time axis with index n. In at least some embodiments, an output symbol may correspond to a concatenation of the prefix and the input signal $s_i$. In at least some embodiments, the prefix may correspond to a cyclic prefix. The prefix of the first or the second output symbol may be based on the last of the two or more sequential discrete values of the first or the second input symbol. Using discrete values from the same symbol for the prefix may enable an easier processing of the symbol at the receiving side, as the symbol may be distorted by components of the same symbol (inter-symbol interference), which may be adjusted, equalized or distorted in the frequency domain.

The processing module 16 is further configured to obtain information related to an overlapping region of subsequent filtered output symbols in a filtered output signal $\tilde{s}_i$. The filtered output signal is provided by the filter module 300 based on the output signal $\bar{s}_i$. The overlapping region of the subsequent filtered output symbols is based on a later filter operation of the filter module 300. In at least some embodiments, the processing module 16 may obtain the information related to the overlapping region from an internal computer-readable memory comprised in the apparatus 10, from an external computer-readable memory, from the filter module 300, or from a control module of a transceiver comprising the apparatus 10.

The processing module 16 is further configured to determine a time alignment of the first output symbol and the second output symbol based on the information related to the overlapping region such that the first output symbol and the second output symbol are timely aligned.

A duration of the prefix may be at least based on information related to the overlapping region. In at least some embodiments, the processing module 16 may be further configured to obtain information related to a delay spread of a radio channel, and the duration of the prefix may be based on the information related to the delay spread of the radio channel. In at least some embodiments, the radio channel may correspond to a physical channel of a mobile communication system, e.g. a physical channel of a 5th-Generation (5G) mobile communication system. In at least some embodiments, the radio channel may correspond to a radio channel a converted output signal based on the filtered output signal $\tilde{s}_i$ is to be transmitted over. In various embodiments, the processing module 16 may be configured to obtain the information related to the delay spread from an internal computer-readable memory comprised in the apparatus 10, from an external computer-readable memory, from a mobile transceiver, from a base station transceiver, or from a control module of a transceiver comprising the apparatus 10.

In at least some embodiments, the processing module 16 may be configured to combine discrete values of the first $\bar{s}_i(n)$ and second $\bar{s}_i(n + 1)$ output symbols in the overlapping region. In at least some embodiments, the processing module 16 may determine the duration of the prefix based on a filter impulse response of the filter module 300, such that the prefix may overlap a ramp-down caused by the filter impulse response, as will be detailed subsequently.

In embodiments the processing module 16 may be implemented using one or more processing units, one or more processing devices, any means for processing, such as a processor, a computer or a programmable hardware component being operable with accordingly adapted software. In other words, the described function of the processing module 16 may as well be implemented in software, which is then executed on one or more programmable hardware components. Such hardware components may comprise a general purpose processor, a Digital Signal Processor (DSP), a micro-controller, etc.

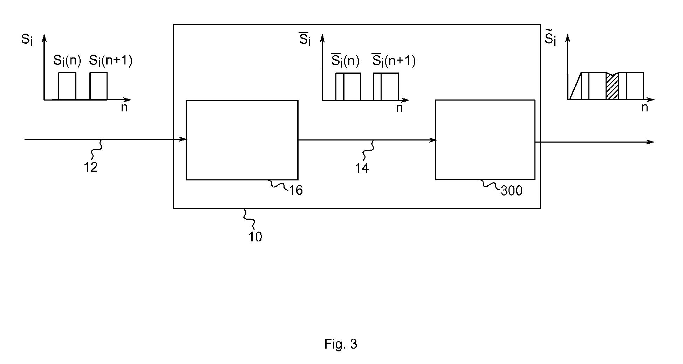

Fig. 3 illustrates a block diagram of an embodiment of the apparatus 10 further comprising the filter module 300 to carry out the later filter operation. The apparatus 10 further comprises the input 12, the processing module 16, and the output 14. The processing module 16 is coupled to the input 12 and the output 14. The output 14 is further coupled to the filter module 300.

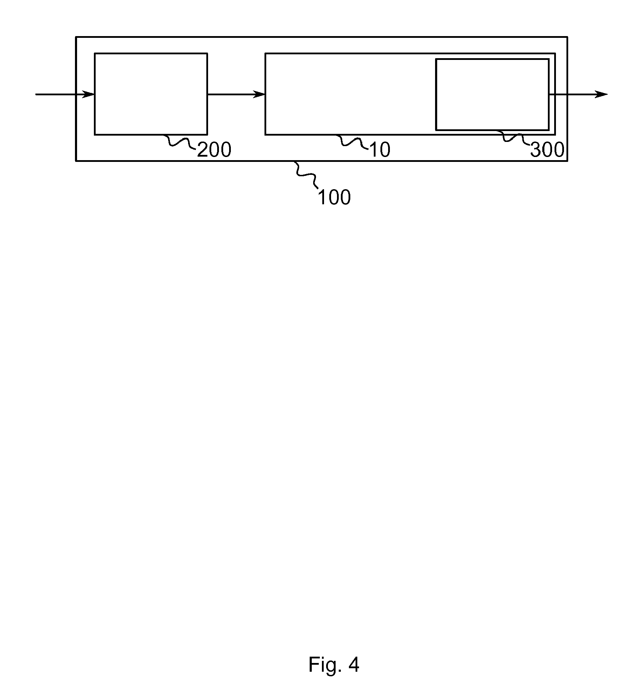

The filter module 300 may be implemented using one or more filter units, one or more filter devices, any means for filtering, such as a Finite Impulse Response (FIR), an Infinite Impulse Response (IIR) filter, a Surface Acoustic Wave (SAW) filter, a Bulk Acoustic Wave (BAW) filter, a processor, a computer or a programmable hardware component being operable with accordingly adapted software. In other words, the described function of the filter module 300 may as well be implemented in software, which is then executed on one or more programmable hardware components. Such hardware components may comprise a general purpose processor, a Digital Signal Processor (DSP), a micro-controller, etc. Moreover, in some embodiments the filter module 300 may be part of the apparatus 10 as illustrated by Fig. 3. In other embodiments, the filter module 300 may be external to the apparatus 10, for example, coupled to the output 14 of the apparatus 10, as shown in Fig. 4.

In at least some embodiments, the filter module 300 may provide a filtered output signal $\tilde{s}_i$ based on the output signal $\bar{s}_i$. The filtered output signal $\tilde{s}_i$ may comprise at least a first filtered symbol $\tilde{s}_i(n)$ based on the first output symbol $\tilde{s}_i(n)$ and a subsequent second filtered symbol $\tilde{s}_i(n + 1)$ based on the second output symbol $\bar{s}_i(n + 1)$. In at least some embodiments, the filter module 300 may be configured to band pass filter the first $\bar{s}_i(n)$ and second $\bar{s}_i(n + 1)$ output symbols.

The processing module 16 may be configured to timely align the first $\bar{s}_i(n)$ and second $\bar{s}_i(n + 1)$ output symbols such that the prefix of the second filtered symbol $\tilde{s}_i(n + 1)$ partly overlaps with the first filtered symbol $\tilde{s}_i(n)$ generated by the first output symbol $\bar{s}_i(n)$ based on the information related to the overlapping region of symbols, as shown in the view graph on the very right hand side of Fig. 3. In at least some embodiments the information related to the overlapping region of symbols may be based on a filter impulse response of the filter module 300.

In at least some embodiments, the filter module 300 may comprise a filter impulse response with a ramp-up period and a ramp-down period. The processing module 16 may be configured to adjust a duration of the prefix based on the ramp-up and ramp-down periods of the filter module 300. In at least some embodiments, the processing module 16 may be configured to timely align the first $\bar{s}_i(n)$ and second $\bar{s}_i(n + 1)$ output symbols such that a ramp-up of the prefix of the second filtered symbol $\tilde{s}_i(n + 1)$ partly overlaps with the ramp-down caused by the impulse response of the first filtered symbol $\tilde{s}_i(n)$, e.g. such that the periodic variance to the output power is reduced.

Fig. 4 illustrates a block diagram of an embodiment of a sub-carrier module 100 suitable for providing a filtered output signal $\tilde{s}_i$. The sub-carrier module 100 comprises an Inverse-Fourier-Transformation module 200 and an embodiment of the above described apparatus 10 comprising a filter module 300 configured to filter the output signal $\bar{s}_i$ to obtain a filtered output signal $\tilde{s}_i$. The Inverse-Fourier-Transformation module 200 obtains a frequency domain input signal and provides a time domain input signal as the input signal $s_i$. In at least some embodiments, the frequency domain input signal may comprise a single sub-carrier of a composite multi-carrier signal. In at least some embodiments, the sub-carrier module 100 may be configured to provide the filtered output signal $\tilde{s}_i$ as a single sub-carrier signal of a composite multi-carrier signal.

The Inverse Fourier-Transformation module 200 may be implemented using one or more transformation units, one or more transformation devices, any means for transforming, a filter bank, one or more inverse or regular Fast-Fourier-Transformation module/units/devices, a processor, a computer or a programmable hardware component being operable with accordingly adapted software. In other words, the described function of the Inverse Fourier-Transformation module 200 may as well be implemented in software, which is then executed on one or more programmable hardware components. Such hardware components may comprise a general purpose processor, a Digital Signal Processor (DSP), a micro-controller, etc. Moreover, in some embodiments the Inverse Fourier-Transformation module 200 may be part of the apparatus 10; in other embodiments, Inverse Fourier-Transformation module 200 may be external to the apparatus 10, for example, coupled to the input of the apparatus 10, as shown in Fig. 4.

More details and aspects of the sub-carrier module 100 (apparatus 10, Inverse-Fourier-Transformation module 200, filter module 300, input signal $s_i$, filtered output signal $\tilde{s}_i$) are mentioned in connection with the proposed concept or one or more examples described above (e.g. Fig. 1 to 3). The sub-carrier module 100 may comprise one or more additional optional features corresponding to one or more aspects of the proposed concept or one or more examples described above or below.

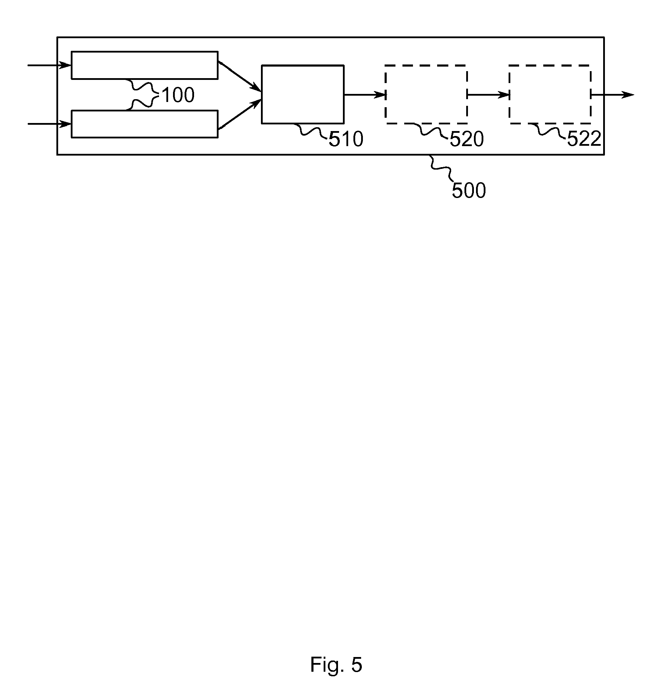

Fig. 5 illustrates a block diagram of an embodiment of a transmitter module 500 comprising two or more sub-carrier modules 100 and an aggregation module 510. The aggregation module 510 is configured to provide an aggregated output signal s in the time domain based on the two or more filtered output signals from the two or more sub-carrier modules 100. In at least some embodiments, the aggregation module 510 may be configured to provide the aggregated output signal as a weighted combination of the tor or more filtered output signals. The aggregation module 510 may be implemented as an aggregation module, a summation module, a combination module, or in software being executed on accordingly adapted hardware components in line with the above-described components. In at least some embodiments, the transmitter module 500 may be configured to provide the aggregated output signal s as a multi-carrier signal comprising the two or more filtered output signals comprising two or more subcarriers.

In at least some embodiments, the transmitter module 500 may further comprise a radio frequency converter 520 providing a converted output signal based on the aggregated output signal. In at least some embodiments, the frequency converter 520 may be configured to up-convert a baseband signal to the radio frequency spectrum. The frequency converter 520 may be implemented using an up-conversion mixer, nano-mechanical oscillation modules, local oscillator, voltage controlled oscillator, or in software, for example. In various embodiments, the transmitter module 500 may further comprise a power amplifier 522, e.g. a power amplifier as may be used in Long Term Evolution (LTE) to amplify the converted output signal. In various embodiments, the converted output signal may be provided to an antenna module.

The transmitter module 500 may be implemented as any means for transmitting, one or more transmitter units, one or more transmitter devices and it may comprise typical transmitter components, such as one or more elements of the group of one or more Power Amplifiers (PAs), one or more filters or filter circuitry, one or more diplexers, one or more duplexers, one or more Digital-to-Analog converters (D/A), one or more modulators or demodulators, one or more mixers, one or more antennas, etc.

In embodiments the aggregation module 510 and/or the frequency converter 520 may be implemented using one or more processing units, one or more processing devices, any means for processing, such as a processor, a computer or a programmable hardware component being operable with accordingly adapted software. In other words, the described functions of the aggregation module 510 and/or the frequency converter 520 may as well be implemented in software, which is then executed on one or more programmable hardware components.

Such hardware components may comprise a general purpose processor, a Digital Signal Processor (DSP), a micro-controller, etc.

More details and aspects of the transmitter 500 (sub-carrier module 100, input signal $s_i$, filtered output signal $\tilde{s}_i$) are mentioned in connection with the proposed concept or one or more examples described above (e.g. Fig. 1 to 3). The transmitter 500 may comprise one or more additional optional features corresponding to one or more aspects of the proposed concept or one or more examples described above or below.

Below, a detailed description of the signal processing of at least some embodiments is given. The variable $n$ shall denote the time domain variable, and $k$ shall denote the frequency domain variable. In this description the number of subcarriers taken together for filtering is denoted by P.

So if $S(k)$ are the subcarrier amplitudes for frequency $k$ then for band $i$ the vector of dimension $P$ of Quadrature Amplitude Modulation (QAM) amplitudes is denoted by $S_i$. It is

$$S_i = \begin{pmatrix} S(k = i \cdot P + 0) \\ S(k = i \cdot P + 1) \\ \vdots \\ S(k = i \cdot P + (P-1)) \end{pmatrix}.$$

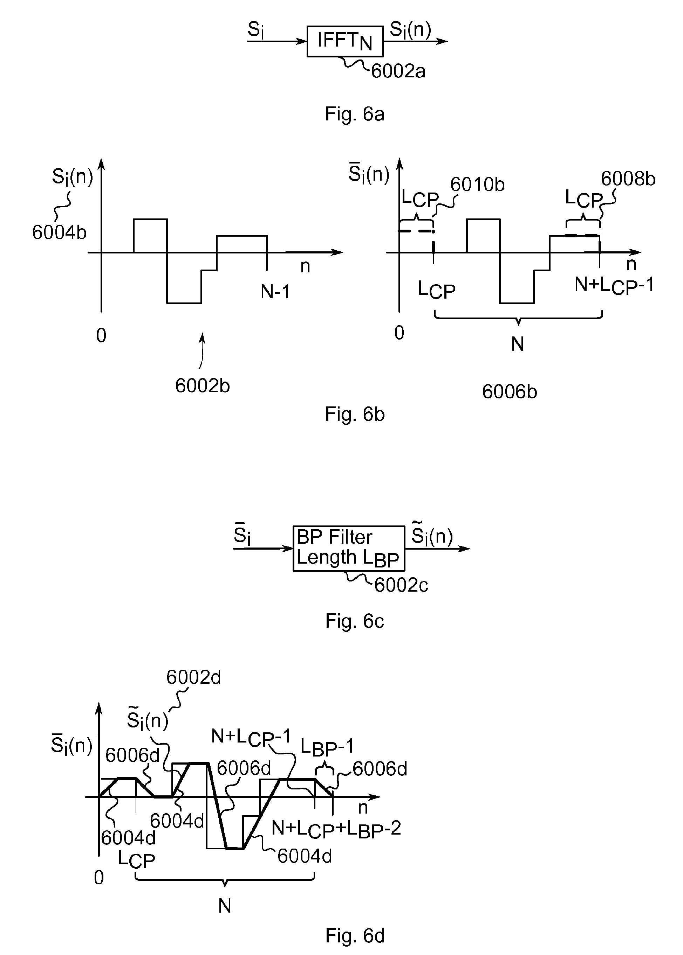

If $S_i$ is given, the corresponding partial spectrum may be inverse discrete Fourier-Transformed, e.g. as in UFMC, as shown in Fig. 6a 6002a, which may illustrate the creation of a partial time signal from a partial spectrum. Thus the partial time signal $s_i(n)$ 6004b as shown in Fig. 6b 6002b may be derived, which is also referred to as input signal $s_i$ comprising at least a first input symbol $s_i(n)$ and a subsequent second input symbol $s_i(n + 1)$. This signal may consist *of N* nonzero values. In at least some embodiments the prefix is cyclic with a length of $L_{CP}$ (length of the cyclic prefix) values 6008b and may be copied 6010b as shown in Fig. 6b 6006b to the beginning of the time signal to arrive at partial signal $\bar{s}_i(n)$ as first output signal that may now consist of $N + L_{CP}$ values. In various embodiments, zero padding and extension to $2N$ values to use fast convolution may also be possible. The first output signal $\bar{s}_i(n)$ may now be band pass filtered as shown in Fig. 6c 6002c, e.g. using a frequency adjusted band pass filter as filter module 300.

Since the length of the band pass impulse response $h_i^{BP}(n)$ is denoted $L_{BP}$ the resulting signal $\tilde{s}_i(n)$ 6002d that is shown in Figure 6d may have a length of $N + L_{CP} + L_{BP}$ - 1. The ramp-up 6004d and ramp-down 6004 at the beginning and the end of the signal $\tilde{s}_i(n)$ due to the band pass filtering is shown here schematically.

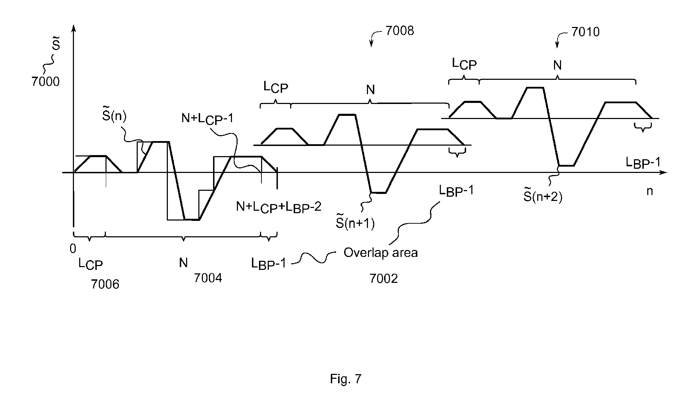

Now the sum of partial signals $\sum_{i=1}^{B} \tilde{s}_i(n) = \tilde{s}(n)$ 7000 may be built to compose the total signal, e.g. using an aggregation module 510. Fig. 7 shows three consecutive symbols 7004, which may correspond to the first filtered output symbol $\tilde{s}_i(n)$, 7006, which may correspond to the second filtered output symbol $\tilde{s}_i(n + 1)$ and 7010, each with a cyclic prefix of length $L_{CP}$ and a part based on the input symbol of length $N$. The symbols show signs of a ramp-up / ramp-down caused by the filter operation, which may extend the signals by $L_{BP}$ - 1. As a total, a symbol may have a length of $N + L_{CP} + L_{BP}$ - 1. As a next step, in embodiments, the resulting signal from this OFDM or UFMC symbol and the next OFDM or UFMC symbol, when available may be overlapped by $L_{BP}$ - 1 values and added up as shown in Figure 7 7002 so that for each OFDM or UFMC symbol $N + L_{CP}$ values 7004; 7006 may be transmitted over the channel and thus a power or envelope variation of the transmitted signal may be avoided or reduced.

The overlapping might not impact the receiver if $L_{CP} \geq L_{BP}$ - 1 since only $N$ values from the shown window may be exploited which might then not be affected.

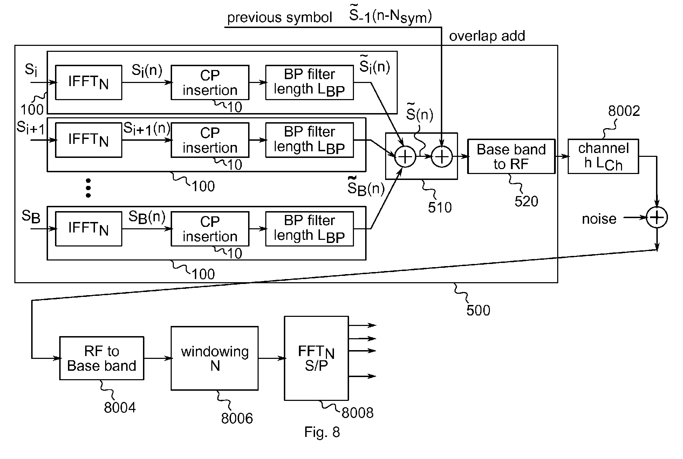

In least some embodiments, a new modulation structure for constant envelope filtered multi-carrier modulation may be given in Fig. 8, which illustrates a block diagram of an embodiment of a system comprising a transmitter module 500. The transmitter module 500 comprises two or more sub-carrier modules 100, an aggregation module 510 and a radio frequency converter 520. A sub-carrier module 100 comprises an Inverse-Fast-Fourier-Transformation module 200 and an apparatus 10 comprising a band pass filter module 300.

The channel 8002 impulse response $h_{Ch}(n)$ may have a length of $L_{CH}$ samples. The total length of the received sequence corresponding to one OFDM symbol may then be increased by $L_{CH}$-1. In the receiver the part from $L_{CP}$ to $N + L_{CP}$ - 1 may be cut out (windowed) 8006, as known from CP-OFDM, after a RF to Baseband down-conversion 8004. Thus $N$ values may be received that may be transformed by $FFT_N$ 8008 to retrieve the transmitted subcarriers. An equalization of the subcarrier QAM amplitudes due to the sub-band band pass filtering as in UFMC may be necessary.

If a single non zero subcarrier is assumed, the spectrum may be given by $S(k = k_0) = 1$. The time-domain signal may then be given by a rect-window multiplied with a sampled complex exponential function (or cosine). $T_s$ is assumed to be the sampling time. In case of embodiments, the window length may be $N \cdot T_s$, for Cyclic Prefix OFDM (CP-OFDM), the window length may be $(N + L_{CP}) \cdot T_s$.

In the frequency domain, Dirac-pulses at the corresponding subcarrier frequency may be convolved with the Fourier-Transform of the rectangular window, using a *sinc*-function in the frequency domain which may give the well-known side ripples. Without quantifying the frequencies exactly, compared to embodiments, the window may be a little longer, thus the *sinc*-function may be more compressed in the frequency direction, but the characteristics may remain. By using the band pass filters afterwards, the ripples may be eliminated and the side lobes of this spectrum may be suppressed in the same way as in embodiments. So the desired spectral properties of UFMC may be maintained by embodiments.

Looking at the base band view in embodiments, the delays of band pass filtering and wireless channel transmission may add up. So if $L_{CP} \geq L_{BP}$ - 1 + $L_{CH}$ - 1, no Inter Symbol Interference (ISI) might occur in the receiver in contrast to the current UFMC proposal where there may be ISI, even if only "soft" ISI.

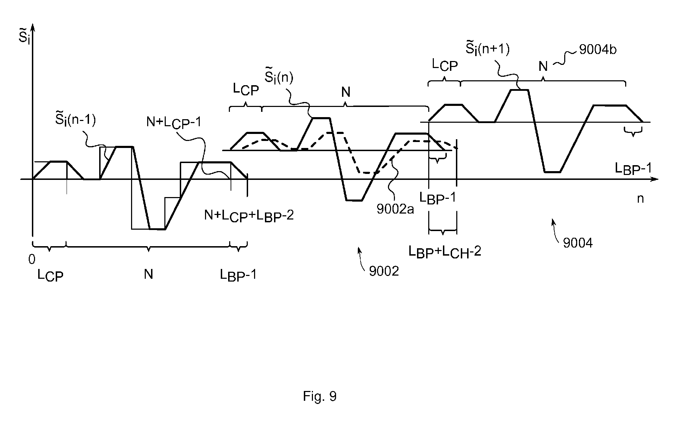

To have the same overhead parameter values to be comparable in efficiency $L_{CP}$ may be set to $L_{CP} = L_{BP}$ - 1 . So channel delay spread $L_{CH} > 1$ may result in inter symbol interference. But as can be seen from Fig. 9 looking at a first symbol 9002 interfering with a second symbol 9004, the kind of interference may be qualified. Fig. 9 shows three consecutive filtered output symbols, $\tilde{s}_i(n$ - 1), $\tilde{s}_i(n)$ 9002, which may correspond to the first filtered output symbol $\tilde{s}_i(n)$, and $\tilde{s}_i(n + 1)$ 9004, which may correspond to the second filtered output symbol $\tilde{s}_i(n + 1)$, each with a cyclic prefix of length $L_{CP}$ and a part based on the input symbol of length $N$. The symbols show signs of a ramp-up / ramp-down caused by the filter operation, which may extend the signals by $L_{BP}$ - 1. As a total, a symbol may have a length of $N + L_{CP} + L_{BP}$-1.

If the time alignment based on the overlapping of symbols chosen too low, e.g if $L_{CP}$ is chosen smaller than $L_{BP} + L_{CH}$ - 1, the part of the first filtered output symbol 9002 shown dashed 9002a that may interfere in the length $N$ window 9004b of the second filtered output symbol 9004 may be the ramp-down part due to the band pass filtering. So, as described in "Waveform contenders for 5G-suitability for short packet and low latency transmissions", "soft" inter symbol interference protection may also be used in embodiments. There might be no efficiency loss due to the cyclic prefix of embodiments and the same or better ISI properties may be achieved in embodiments. The additional parameter $L_{CP}$ may be used for a more flexible design.

In at least some embodiments, the processing module 16 may be configured to determine the time alignment of the first output symbol $\bar{s}_i(n)$ and the second output signal $\bar{s}_i(n + 1)$ such that the resulting first filtered output symbol $\tilde{s}_i(n)$ and second filtered output signal $\tilde{s}_i(n + 1)$ overlap the prefix of length $L_{CP}$ and the filter impulse response of length $L_{CP}$ - 1 and the channel impulse response of length $L_{CH}$ - 1. The processing module may be configured to duration of the prefix on the filter impulse response of length $L_{CP}$ - 1 and the channel impulse response of length $L_{CH}$ - 1.

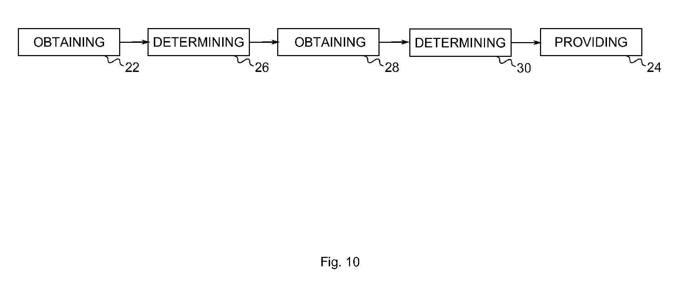

Fig. 10 illustrates a block diagram of an embodiment of a method for providing an output signal $\bar{s}_i$ for a

filter module 300. The method comprises obtaining 22 an input signal $s_i$. The input signal comprises $s_i$ at least a first input symbol $s_i(n)$ and a subsequent second input symbol $s_i(n + 1)$. An input symbol comprises two or more samples. The method further comprises providing 24 the output signal $\overline{s}_i$ and determining 26 the output signal $\overline{s}_i$ based on the input signal $s_i$. The output signal $\overline{s}_i$ comprises at least a first output symbol $\overline{s}_i(n)$ based on a first input symbol $s_i(n)$ and a subsequent second output symbol $\overline{s}_i(n + 1)$ based on a second input symbol $s_i(n + 1)$. An output symbol comprises a prefix and an input symbol. The method further comprises obtaining 28 information related to an overlapping region of subsequent filtered output symbols in a filtered output signal $\widetilde{s}_i$. The filtered output signal is provided by the filter module 300 based on the output signal $\overline{s}_i$. The overlapping region of the subsequent filtered output symbols is based on a later filter operation of the filter module 300. The method further comprises determining 30 a time alignment of the first output symbol and the second output symbol based on the information related to the overlapping region such that the first output symbol and the second output symbol are timely aligned.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

A further embodiment is a computer program product comprising a computer readable medium having computer readable program code embodied therein, the computer readable program code being configured to implement one of the above methods when being loaded on a computer, a processor, or a programmable hardware component.

Embodiments may allow using the spectral side lobe attenuation of UFMC while maintaining a constant envelope or power of the transmitted and thus power amplified signal. Thus all the properties of UFMC may be maintained while there is constant envelope, which may reduce or avoid disturbances in other electronic devices caused by periodic power variations Further there is more flexibility in the setting of $L_{CP}$ and $L_{BP}$, so better ISI suppression may be realized. While the existing UFMC proposal has e.g. a power ramp-up and ramp-down of 2 times 70 samples per OFDM symbol (e.g. 2 times every 71.43 $\mu$s), no ramp-up or ramp-down might be seen in the resulting signal in embodiments.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

**Claims**

1. An apparatus (10) for providing an output signal $\bar{s}_i$ for a filter module (300), the apparatus (10) comprising

an input (12) to obtain an input signal $s_i$, wherein the input signal $s_i$ comprises at least a first input symbol $s_i(n)$ and a subsequent second input symbol $s_i(n + 1)$, and wherein an input symbol comprises two or more samples;
an output (14) to provide the output signal $\bar{s}_i$;

a processing module (16), which is coupled to the input (12) and the output (14), wherein the processing module (16) is configured to

determine the output signal $\bar{s}_i$ based on the input signal $s_i$, wherein the output signal $\bar{s}_i$ comprises at least a first output symbol $\bar{s}_i(n)$ based on the first input symbol $s_i(n)$ and a subsequent second output symbol $\bar{s}_i(n + 1)$ based on the second input symbol $s_i(n + 1)$, and wherein an output symbol comprises a prefix and an input symbol,
obtain information related to an overlapping region of subsequent filtered output symbols in a filtered output signal $\tilde{s}_i$, the filtered output signal being provided by the filter module (300) based on the output signal $\bar{s}_i$, wherein the overlapping region of the subsequent filtered output symbols is based on a later filter operation of the filter module (300), and
determine a time alignment of the first output symbol and the second output symbol based on the information related to the overlapping region such that the first output symbol and the second output symbol are timely aligned.

2. The apparatus (10) of claim 1 further comprising the filter module (300) to carry out the later filter operation, wherein the filter module (300) provides a filtered output signal $\tilde{s}_i$ based on the output signal $\bar{s}_i$, wherein the filtered output signal $\tilde{s}_i$ comprises at least a first filtered symbol $\tilde{s}_i(n)$ based on the first output symbol $\bar{s}_i(n)$ and a subsequent second filtered symbol $\tilde{s}_i(n + 1)$ based on the second output symbol $\bar{s}_i (n + 1)$, wherein the processing module (16) is configured to timely align the first $\bar{s}_i(n)$ and second $\bar{s}_i(n + 1)$ output symbols such that the prefix of the second filtered symbol $\tilde{s}_i(n + 1)$ partly overlaps with the first filtered symbol $\tilde{s}_i(n)$ based on the information related to the overlapping region of symbols.

3. The apparatus (10) of claim 2, wherein a duration of the prefix is at least based on the information related to the overlapping region and/or wherein the processing module (16) is configured to obtain information related to a delay spread of a radio channel, and wherein the duration of the prefix is based on the information related to the delay spread of the radio channel.

4. The apparatus (10) of claim 2, wherein the filter module (300) is configured to band pass filter the first $\bar{s}_i(n)$ and second $\bar{s}_i(n + 1)$ output symbols.

5. The apparatus (10) of claim 4, wherein the filter module (300) comprises a filter impulse response with a ramp-up period and a ramp-down period, wherein the processing module (16) is configured to adjust a duration of the prefix based on the ramp-up and ramp-down periods of the filter module (300).

6. The apparatus (10) of claim 1, wherein the processing module (16) is configured to combine discrete values of the first $\overline{s}_i(n)$ and second $\overline{s}_i(n + 1)$ output symbols in the overlapping region.

7. The apparatus (10) of claim 1, wherein the input (12) is configured to obtain the input signal $s_i$ from a transformation module (200).

8. The apparatus (10) of claim 7, wherein the transformation module (200) corresponds to an Inverse-Fourier-Transformation module and/or wherein the transformation module corresponds to an Inverse-Discrete-Fourier-Transformation module.

9. The apparatus (10) of claim 1, wherein the prefix of the first or the second output symbol is based on the last of the two or more sequential discrete values of the first or the second input symbol.

10. A sub-carrier module (100) suitable for providing a filtered output signal $\tilde{s}_i$, the sub-carrier module (100) comprising an Inverse-Fourier-Transformation module (200), and the apparatus (10) of claim 2, wherein the Inverse-Fourier-Transformation module (200) is configured to obtain a frequency domain input signal and to provide a time domain output signal, the time domain output signal serving as the input signal $s_i$.

11. A transmitter module (500) comprising two or more sub-carrier modules (100) of claim 10 and an aggregation module (510), wherein the aggregation module (510) is configured to provide an aggregated output signal $\tilde{s}$ in the time domain based on the two or more filtered output signals from the two or more sub-carrier modules (100).

12. The transmitter module (500) of claim 11 further comprising a radio frequency converter (520) configured to provide a converted output signal based on the aggregated output signal.

13. The transmitter module (500) of claim 12, further comprising a power amplifier (522) configured to amplify the converted output signal.

14. A method for providing an output signal $\overline{s}_i$ for a filter module (300), the method comprising:

    obtaining (22) an input signal $s_i$, wherein the in-
put signal $s_i$ comprises at least a first input symbol $s_i(n)$ and a subsequent second input symbol $s_i(n + 1)$, and wherein an input symbol comprises two or more samples;
providing (24) the output signal $\overline{s}_i$;
determining (26) the output signal $\overline{s}_i$ based on the input signal $s_i$, wherein the output signal $\overline{s}_i$ comprises at least a first output symbol $\overline{s}_i(n)$ based on the first input symbol $s_i(n)$ and a subsequent second output symbol $\overline{s}_i(n + 1)$ based on the second input symbol $s_i(n + 1)$, and wherein an output symbol comprises a prefix and an input symbol,
obtaining (28) information related to an overlapping region of subsequent filtered output symbols in a filtered output signal $\tilde{s}_i$, the filtered output signal being provided by the filter module (300) based on the output signal $\overline{s}_i$, wherein the overlapping region of the subsequent filtered output symbols is based on a later filter operation of the filter module (300), and
determining (30) a time alignment of the first output symbol and the second output symbol based on the information related to the overlapping region such that the first output symbol and the second output symbol are timely aligned.

15. A computer program product comprising a computer readable medium having computer readable program code embodied therein, the computer readable program code being configured to implement the method of claim 14, when being loaded on a computer, a processor, or a programmable hardware component.

**Amended claims in accordance with Rule 137(2) EPC.**

1. An apparatus (10) for providing an output signal $\overline{s}_i$ for a filter module (300),
the apparatus (10) comprising
an input (12) to obtain an input signal $s_i$ comprising a single sub-carrier of a composite multi-carrier signal, wherein the input signal $s_i$ comprises at least a first input symbol $s_i(n)$ and a subsequent second input symbol $s_i(n + 1)$, and wherein an input symbol comprises two or more samples;
an output (14) to provide the output signal $\overline{s}_i$;
a processing module (16), which is coupled to the input (12) and the output (14), wherein the processing module (16) is configured to

    determine the output signal $\overline{s}_i$ based on the input signal $s_i$, wherein the output signal $\overline{s}_i$ comprises

at least a first output symbol $\bar{s}_i(n)$ based on the first input symbol $s_i(n)$ and a subsequent second output symbol $\bar{s}_i(n + 1)$ based on the second input symbol $s_i(n + 1)$, and wherein an output symbol comprises a prefix and an input symbol, obtain information related to an overlapping region of subsequent filtered output symbols in a filtered output signal $\tilde{s}_i$, the filtered output signal being provided by the filter module (300) based on the output signal $\bar{s}_i$, wherein the overlapping region of the subsequent filtered output symbols is based on a later filter operation of the filter module (300),

determine a time alignment of the first output symbol and the second output symbol based on the information related to the overlapping region such that the first output symbol and the second output symbol are timely aligned, and timely align the first $\bar{s}_i(n)$ and second $\bar{s}_i(n + 1)$ output symbols such that the prefix of the second filtered symbol $\tilde{s}_i(n + 1)$ partly overlaps with the first filtered symbol $\tilde{s}_i(n)$ based on the information related to the overlapping region of symbols, the filter module (300) being configured to band pass filter the first $\bar{s}_i(n)$ and second $\bar{s}_i(n + 1)$ output symbols, wherein the filter module (300) provides a filtered output signal $\tilde{s}_i$ based on the output signal $\bar{s}_i$, wherein the filtered output signal $\tilde{s}_i$ comprises at least a first filtered symbol $\tilde{s}_i(n)$ based on the first output symbol $\bar{s}_i(n)$ and a subsequent second filtered symbol $\tilde{s}_i(n + 1)$ based on the second output symbol $\bar{s}_i(n + 1)$.,

2. The apparatus (10) of claim 1, wherein a duration of the prefix is at least based on the information related to the overlapping region and/or wherein the processing module (16) is configured to obtain information related to a delay spread of a radio channel, and wherein the duration of the prefix is based on the information related to the delay spread of the radio channel.

3. The apparatus (10) of claim 1, wherein the filter module (300) comprises a filter impulse response with a ramp-up period and a ramp-down period, wherein the processing module (16) is configured to adjust a duration of the prefix based on the ramp-up and ramp-down periods of the filter module (300).

4. The apparatus (10) of claim 1, wherein the processing module (16) is configured to combine discrete values of the first $\bar{s}_i(n)$ and second $\bar{s}_i(n + 1)$ output symbols in the overlapping region.

5. The apparatus (10) of claim 1, wherein the input (12) is configured to obtain the input signal $s_i$ from a transformation module (200).

6. The apparatus (10) of claim 6, wherein the transformation module (200) corresponds to an Inverse-Fourier-Transformation module and/or wherein the transformation module corresponds to an Inverse-Discrete-Fourier-Transformation module.

7. The apparatus (10) of claim 7, wherein the prefix of the first or the second output symbol is based on the last of the two or more sequential discrete values of the first or the second input symbol.

8. A sub-carrier module (100) suitable for providing a filtered output signal $\tilde{s}_i$, the sub-carrier module (100) comprising an Inverse-Fourier-Transformation module (200), and the apparatus (10) of claim 2, wherein the Inverse-Fourier-Transformation module (200) is configured to obtain a frequency domain input signal and to provide a time domain output signal, the time domain output signal serving as the input signal $s_i$.

9. A transmitter module (500) comprising two or more sub-carrier modules (100) of claim 10 and an aggregation module (510), wherein the aggregation module (510) is configured to provide an aggregated output signal s in the time domain based on the two or more filtered output signals from the two or more sub-carrier modules (100).

10. The transmitter module (500) of claim 10 further comprising a radio frequency converter (520) configured to provide a converted output signal based on the aggregated output signal.

11. The transmitter module (500) of claim 11, further comprising a power amplifier (522) configured to amplify the converted output signal.

12. A method for providing an output signal $\bar{s}_i$ for a filter module (300), the method comprising:

obtaining (22) an input signal $s_i$ comprising a single sub-carrier of a composite multi-carrier signal, wherein the input signal $s_i$ comprises at least a first input symbol $s_i(n)$ and a subsequent second input symbol $s_i(n + 1)$, and wherein an input symbol comprises two or more samples; providing (24) the output signal $\bar{s}_i$; determining (26) the output signal $\bar{s}_i$ based on the input signal $s_i$, wherein the output signal $\bar{s}_i$ comprises at least a first output symbol $\bar{s}_i(n)$ based on the first input symbol $\bar{s}_i(n)$ and a subsequent second output symbol $\bar{s}_i(n + 1)$ based on the second input symbol $s_i(n + 1)$, and where-

in an output symbol comprises a prefix and an input symbo l,

obtaining (28) information related to an overlapping region of subsequent filtered output symbols in a filtered output signal $\tilde{s}_i$, the filtered output signal being provided by the filter module (300) based on the output signal $\bar{s}_i$, wherein the overlapping region of the subsequent filtered output symbols is based on a later filter operation of the filter module (300), and

determining (30) a time alignment of the first output symbol and the second output symbol based on the information related to the overlapping region such that the first output symbol and the second output symbol are timely aligned,

timely aligning (32) the first $\bar{s}_i(n)$ and second $\bar{s}_i(n + 1)$ output symbols such that the prefix of the second filtered symbol $\tilde{s}_i(n + 1)$ partly overlaps with the first filtered symbol $\tilde{s}_i(n)$ based on the information related to the overlapping region of symbols, and

band pass filtering (34) the first $\bar{s}_i(n)$ and second $\bar{s}_i(n + 1)$ output symbols, by providing a filtered output signal $\tilde{s}_i$ based on the output signal $\bar{s}_i$, wherein the filtered output signal $\tilde{s}_i$ comprises at least a first filtered symbol $\tilde{s}_i(n)$ based on the first output symbol $\bar{s}_i(n)$ and a subsequent second filtered symbol $\tilde{s}_i(n + 1)$ based on the second output symbol $\bar{s}_i(n + 1)$.

13. A computer program product comprising a computer readable medium having computer readable program code embodied therein, the computer readable program code being configured to implement the method of claim 12, when being loaded on a computer, a processor, or a programmable hardware component.

Fig. 1

Fig. 2a (Part 1)

Fig. 2a (Part 2)

OFDM, $L_{CP}$-79

2002b

UFMC, L-80,ck$_{BLA}$-60

2004b

Fig. 2b

Fig. 3

Fig. 4

Fig. 5

Fig. 6a

Fig. 6b

Fig. 6c

Fig. 6d

Fig. 7

Fig. 8

Fig. 9

| OBTAINING | → | DETERMINING | → | OBTAINING | → | DETERMINING | → | PROVIDING |

22    26    28    30    24

Fig. 10

Europäisches
Patentamt

European
Patent Office

Office européen
des brevets

# EUROPEAN SEARCH REPORT

Application Number

EP 15 30 5618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEISS T ET AL: "Mutual Interference in OFDM-based Spectrum Pooling Systems", PROCEEDINGS / 2004 IEEE 59TH VEHICULAR TECHNOLOGY CONFERENCE, VTC 2004-SPRING : TOWARDS A GLOBAL WIRELESS WORLD ; 17 - 19 MAY 2004, MILAN, ITALY, IEEE OPERATIONS CENTER, PISCATAWAY, NJ, vol. 4, 17 May 2004 (2004-05-17), pages 1873-1877, XP010766486, DOI: 10.1109/VETECS.2004.1390598 ISBN: 978-0-7803-8255-8 * Section IV.; figure 3 * | 1-15 | INV. H04L27/26 |
| X | E V Hhi ET AL: "The 5GNOW Project Consortium groups the following organizations: Partner Name Short name Country FRAUNHOFER-GESELLSCHAFT ZUR FOERDERUNG DER ANGEWANDTEN FORSCHUNG 5G Waveform Candidate Selection The 5GNOW Project Consortium groups the following organizations: Partner Name Short name Country FRAUNHOFE", , 21 November 2013 (2013-11-21), XP055175081, Retrieved from the Internet: URL:http://www.5gnow.eu/system/files/5GNOW_D3.1_v1.1_1.pdf [retrieved on 2015-03-10] * page 27 * * figures 2.4.1,2.4.2 * * Section 2.2; figures 2.2.1, 2.2.2 * | 1-15 | TECHNICAL FIELDS SEARCHED (IPC)  H04L |

The present search report has been drawn up for all claims

| Place of search | Date of completion of the search | Examiner |
|---|---|---|
| Berlin | 6 October 2015 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 086 523 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHAICH, F. ; WILD, T. ; CHEN, Y.** Waveform contenders for 5G-suitability for short packet and low latency transmissions. *IEEE VTCs,* 2014, 14

- **FRANK SCHAICH ; THORSTEN WILD ; YEJIAN CHEN.** Waveform contenders for 5G - suitability for short packet and low latency transmissions. *Bell Labs on IEEE VTC spring,* 2014